# EUROPÄISCHE PATENTSCHRIFT

(11) **EP 1 281 933 B1**
(45) Veröffentlichungstag und Bekanntmachung des Hinweises auf die Patenterteilung: **05.10.2005**
(21) Anmeldenummer: 02016544.5
(22) Anmeldetag: 24.07.2002
(51) Int. Cl.: G01C 21/32, G01C 21/30, G09B 29/10

(54) **Verfahren und System zum Auffinden eines Ortes in einer digitalen Karte**
Method and system for finding a location in a digital map
Procédé et système pour trouver un lieu dans une carte numérique

(30) Priorität: 03.08.2001 DE 10137632
(43) Veröffentlichungstag der Anmeldung: 05.02.2003
(73) Patentinhaber: DaimlerChrysler AG, 70567 Stuttgart (DE)
(72) Erfinder: Demir, Cesim, 71134 Aidlingen (DE); Hoffmann, Ralf, 71032 Böblingen (DE); Hoyland, Peter, 71069 Sindelfingen (DE); Knapp, Reiner, 71088 Holzgerlingen (DE)

(56) Entgegenhaltungen:
- EP-A- 0 798 540
- EP-A- 1 028 405
- DE-A- 19 539 367
- DE-A- 19 750 786
- DE-A- 19 911 676

## Beschreibung

Die Erfindung betrifft ein Verfahren zum Auffinden eines Ortes in einer digitalen Karte und ein System zum Ausführen des Verfahrens. Ein derartiges Verfahren ist beispielsweise aus der EP 0 798540 A1 bekannt.

In der DE 197 50 786 C2 wird ein Verfahren und System zum Auffinden eines Ortes in einer digitalen Karte beschrieben. Hierfür wird ein gesuchtes Kartenelement, das einen Ort, angegeben in geographischen Koordinaten, und zusätzliche Informationen umfasst, mit in einer Referenzdatei gespeicherten Kartenelementen der digitalen Karte verglichen und das gesuchte Kartenelement wird mittels einer Plausibilitätsprüfung ermittelt.

In der EP 1 020 832 A1 wird ein Verfahren zum Auffinden von speziellen Kartenelementen, Objekten, in einer digitalen Karte beschrieben. Objekte sind nach den Grundsätzen der objektorientierten Datenmodellierung angegebene Kartenelemente und bestehen aus einem Ort und weiteren Attributen. Ein Objekt gehört genau einer Objektklasse an und kann aus mehreren weiteren Objekten bestehen. Zum Auffinden des gesuchten Objektes in der digitalen Karte wird um den Ort des gesuchten Objektes herum ein Suchgebiet generiert. Das gesuchte Objekt wird durch Vergleich der Attribute des gesuchten Objektes mit den Attributen aller Objekte des Suchgebietes, die der Objektklasse des gesuchten Objektes angehören, ermittelt.

Für die Übertragung von Verkehrsinformationen über RDS/TMC (Radio Data System/ Traffic Message Channel) und deren Zuordnung zu geographischen Orten werden Referenztabellen verwendet, die einem Ort einen Code zuweisen. Die Verkehrsnachrichten werden dann zusammen mit dem Code übertragen und im Fahrzeug durch die in der Referenztabelle gegebene Zuordnung zu einem geographischen Ort diesem Ort in der digitalen Karte zugewiesen. Bei diesem Verfahren können Informationen nur Orten zugewiesen werden, die in der Referenztabelle mit Code vorhanden sind. Sender und Empfänger müssen die identische Referenztabelle vorliegen haben, die auch gleichzeitig aktualisiert werden muss. Ein Code erlaubt keinen Rückschluss auf die geographische Lage des Ortes.

Ein weiteres Verfahren zum Auffinden von Orten ist der Global Automotive Telematics Standard (GATS). GATS wurde zur Übertragung von Verkehrsinformationen speziell in GSM-Netzen entwickelt. Für das GATS Verfahren sind GATS Geocodes definiert, die mit den Codes aus RDS/TMC vergleichbar sind. Das GATS Verfahren arbeitet ebenfalls tabellenorientiert. Die Tabellen des GATS Verfahrens können "im laufenden Betrieb" aktualisiert werden, und der GATS Geocode erlaubt Rückschlüsse auf die Lage des gesuchten Kartenelementes. Die Anzahl der Kartenelemente, die aufgefunden werden können, ist durch das Geocode-Koordinatensystem beschränkt. Die Tabellen müssen senderseitig regelmäßig aktualisiert werden, und die GATS Geocodes der Kartenelemente müssen teilautomatisch mit den Objekten der digitalen Karten gekoppelt werden. Bisher sind GATS Geocodes nur in Deutschland definiert.

Üblicherweise sind Orte in digitalen Karten in geographischen Koordinaten, also in Längen- und Breitenangaben angegeben. Die Angabe von geographischen Koordinaten ist aber u. U. nicht präzise genug, da Kartenelemente wie Straßenkreuzungen, Abzweigungen etc. in unterschiedlichen digitalen Karten u. U. unterschiedliche Orten zugeordnet sind, die sich auch z. B. bei Aktualisierung der Karte ändern können.

Der Erfindung liegt als technisches Problem die Bereitstellung eines Verfahrens und Systems der eingangs genannten Art zugrunde, bei dem ein Ort in einer digitalen Karte präzise aufgefunden werden kann.

Die Erfindung löst diese Aufgabe durch die Bereitstellung eines Verfahrens mit den Merkmalen des Anspruchs 1 und eines Systems mit den Merkmalen des Anspruchs 18.

Bei dem erfindungsgemäßen Verfahren wird zum Auffinden eines Ortes in einer digitalen Karte zunächst ein zweites Koordinatensystem definiert und zu dem gesuchten Ort die Koordinatendaten im zweiten Koordinatensystem bestimmt. Danach wird das zweite Koordinatensystem in der digitalen Karte aufgefunden und die Koordinatendaten des gesuchten Ortes in dem zweiten Koordinatensystem aufgetragen und damit der Ort in der digitalen Karte aufgefunden. Durch eine geeignete Wahl des zweiten Koordinatensystems können bestimmte Fehlerquellen beim Auffinden des Ortes vermieden werden, da sich z. B. systematische Fehler der Karte, wie ein Versatz der Karte als Ganzes (offset) aufheben lassen. Außerdem lassen sich die Informationen im Hinblick auf ein beschränktes Übertragungsmedium kompakt übertragen und sind generisch, d. h. nur auf Karteninhalte bezogen und unabhängig von sonstigen Codes oder bestimmten Datenmodellen oder -strukturen.

Das zweite Koordinatensystem wird geeigneterweise durch einen Bezugspunkt, nämlich den Ursprung des Koordinatensystems, und weitere Informationen definiert.

In einer Weiterbildung des Verfahrens sind bezogen auf die Orte in der digitalen Karte zusätzliche Informationen gespeichert. Diese Informationen umfassen Straßen, Kreuzungen, Straßentypen, Brücken, Hotels, Sehenswürdigkeiten, Restaurants, Banken, Tankstellen etc. Kartenelemente umfassen Orte und zusätzliche Informationen.

Das Verfahren lässt sich vorteilhaft ausführen, indem das zweite Koordinatensystem durch ein Kartenelement definiert wird, wobei als Bezugspunkt des weiteren Koordinatensystems der Ort des Kartenelementes der digitalen Karte gewählt wird und weitere Informationen des Kartenelements den Rest des Koordinatensystems definieren. Idealerweise wird dabei ein Kartenelement gewählt, das ein wesentliches Element für die bestimmungsgemäße Nutzung der Karte darstellt und das in einer Beziehung zu dem gesuchten Kartenelement steht. Hierbei kann mit hoher Wahrscheinlichkeit davon ausgegangen werden, dass das Kartenelement, dessen Orte den Bezugspunkt bildet, bereits in der digitalen Karte vorhanden ist.

Vorteilhafterweise sind die gesuchten Orte in einer Tabelle und/oder einer weiteren digitalen Karte gespeichert. In der Tabelle und/oder der weiteren digitalen Karte wird der Ort bestimmt, der in der digitalen Karte aufgefunden werden soll. Eine Möglichkeit der Ausführung besteht darin, dass die in der Tabelle und/oder der weiteren digitalen Karte gespeicherten Orte bereits in dem zweiten Koordinatensystem gespeichert sind, wobei jeder Ort bezogen auf ein bestimmtes zweites Koordinatensystem mit einem bestimmten zweiten Bezugspunkt oder alle Orte bezogen auf das gleiche zweite Koordinatensystem gespeichert sein können. Eine andere mögliche Ausführung besteht darin, erst bei Auswahl eines Ortes in der Tabelle und/oder der weiteren digitalen Karte, diesen entsprechend in ein vorteilhaftes zweites Koordinatensystem zu transformieren.

Eine weitere vorteilhafte Ausführungsform des Verfahrens kommt zum Tragen, falls das Kartenelement, das das zweite Koordinatensystem definiert, in der Karte fehlen sollte. Das Kartenelement, das das zweite Koordinatensystem bildet, wird, falls es in der digitalen Karte fehlen sollte, von der weiteren digitalen Karte in die digitalen Karte übertragen. Somit kann sichergestellt werden, dass das zweite Koordinatensystem stets in der digitalen Karte vorhanden ist.

In einer vorteilhaften Weiterbildung werden zum Auffinden von Kartenelementen die zusätzlichen Informationen des Kartenelementes verglichen. Hierbei kann in der Tabelle und/oder der weiteren digitalen Karte ein den Nutzer interessierender Ort bzw. ein den Nutzer interessierendes Kartenelement bestimmt werden und dann in der digitalen Karte aufgefunden werden. Dies kann im folgenden Beispiel Anwendung finden: Der Nutzer sucht ein Hotel, ein oder mehrere Orte mit der zusätzlichen Information Hotel wird in der Tabelle und/oder der weiteren digitalen Karte bestimmt, in der digitalen Karte gesucht, gefunden, ggf. mit den aktuellen Informationen des Kartenelementes aus der Tabelle und/oder der weiteren digitalen Karten versehen und ggf. weiterverarbeitet, z. B. optisch hervorgehoben. Auf die gleiche Weise wird vorteilhaft vorgegangen, wenn in Schritt c) das Kartenelement gesucht wird, das das zweite Koordinatensystem bildet.

Eine vorteilhafte Ausführung der Erfindung erlaubt auch das Zuordnen von Kartenelementen in der digitalen Karte, die vor der Zuordnung in der digitalen Karte fehlten. Hierfür wird das gesuchte Kartenelement in der digitalen Karte gesucht, falls es gefunden wird, wird es z. B. ergänzt, aktualisiert, optisch hervorgehoben oder in einer anderen geeigneten Weise verarbeitet. Wird es dagegen nicht in der digitalen Karte vorgefunden, so wird es aus der weiteren digitalen Karte in die digitale Karte übertragen und dort gespeichert. Dies erlaubt das Zusammenwirken von digitalen Karten unterschiedlicher Herstellungsdaten, unterschiedlicher Aktualität und vor allem die Zuordnung von dynamischen Kartenelementen, die nur zeitweise vorhanden sind, z. B. Ereignissen wie Konzerte, Festivals oder Verkehrsstaus.

Es ist außerdem vorteilhaft, den aufgefundenen Ort bzw. das aufgefundene Kartenelement als Ziel oder Zwischenziel für ein Navigationssystem zu verwenden. So kann das Navigationssystem eine Routenberechnung zu dem aufgefundenen Ort bzw. dem aufgefundenen Kartenelement durchführen und der Nutzer hat den erhöhten Komfort, dass er eine Wegleitung an das Ziel bzw. Zwischenziel erhält und den Weg, in möglicherweise fremder Umgebung, nicht selbst finden muss.

Wird das weitere Koordinatensystem eindimensional gewählt, so kann der gesuchte Ort mit der Angabe einer einzigen Koordinate aufgefunden werden. Zusätzlich zu den Koordinaten muss noch das eindimensionale Bezugskoordinatensystem angegeben werden, dessen Ort und weitere Informationen, z. B. die Richtung dann die definierenden Elemente des weiteren Koordinatensystems sind. Auf diese Weise wird durch die Angabe von kompakten Informationen, die bei Übertragung über ein Medium mit wenig Übertragungskapazität, schnell und preiswert zu übertragen sind, erreicht, dass ein Ort in einer digitalen Karte präzise aufgefunden werden kann.

Vorteilhafterweise wird das weitere, eindimensionale Koordinatensystem durch ein Kartenelement definiert, wobei zweidimensionale Kartenelemente, wie z. B. Kanten besonders geeignet sind. Kanten besitzen nämlich von ihrer Natur her einen Ort und eine Richtung, die dann die bestimmenden Elemente des weiteren Koordinatensystems werden. Straßen werden in digitalen Karten, die zum Zwecke der Navigation verwendet werden, als Kanten dargestellt und Kreuzungen als Knoten. Kanten sind deshalb für diese digitalen Karten wesentliche Elemente des Nutzungszweckes. Aus ihnen wird nämlich eine Route aufgebaut, die ein Fahrzeug zu einem definierten Ziel führt.

Hieraus ergibt sich eine weitere, besonders vorteilhafte Ausführung der Erfindung. Wird die Kante, die definierendes Kartenelement des weiteren Koordinatensystems ist, so gewählt, dass sie auf einer berechneten Route eines Fahrzeugs liegt, so ist auch sicher, dass sie in der digitalen Karte vorliegt, oder schon im Zuge der Routenberechnung dorthin übertragen wurde. Damit ist sichergestellt, dass sich das weitere Koordinatensystem auf ein bekanntes, relevantes Kartenelement bezieht, das ohne zusätzlichen Aufwand in der digitalen Karte vorliegt. Es muss weder speziell für das weitere Koordinatensystem generiert werden, noch ist es in der digitalen Karte überflüssig, da es sowieso für deren eigentlichen Zweck, nämlich die Routenführung benötigt wird.

Die Wahl einer Kante als definierendes Element des weiteren Koordinatensystems hat überdies den Vorteil, dass die Kante so gewählt werden kann, dass der gesuchte Ort über diese Kante erreicht werden kann. So liegt neben der Information über den gesuchten Ort auch die Information vor, wie dieser Ort zu erreichen ist. Dies ist vor allem in der Anwendung in Verbindung mit einem Navigationssystem von großem Vorteil, da es die Routenberechnung zu dem gesuchten Ort als Ziel oder Zwischenziel erleichtert.

Zum noch präziseren Auffinden des Ortes in der digitalen Karte kann in einer möglichen, verbesserten Ausführung des Verfahrens um den ungefähren Ort herum ein Suchgebiet generiert werden, in dem nach den passenden Orten gesucht wird. Bei der Suche nach Kartenelementen werden hierfür im Suchgebiet die zusätzlichen Informationen der Kartenelemente im Suchgebiet mit den zusätzlichen Informationen des gesuchten Kartenelements verglichen und bei Übereinstimmung bzw. weitgehender Übereinstimmung entschieden, dass das gesuchte Element gefunden wurde.

Durch die Verwendung eines objektorientierten Datenmodells zur Angabe der Kartenelemente wird erreicht, dass von den Vorteilen der Objektorientierung wie z. B. der Flexibilität, der klaren Strukturierung, der definierten Schnittstellen, der Wiederverwendbarkeit, der Offenheit für Erweiterungen etc. profitiert werden kann. Hierbei besteht ein Objekt, das ein Kartenelement darstellt, aus einem Ort und weiteren Attributen. Ein Objekt gehört genau einer Objektklasse an und kann aus mehreren weiteren Objekten bestehen.

Zum Auffinden eines Objektes in einem Suchgebiet der digitalen Karte werden dann Attribute der Objekte, die sich im Suchgebiet befinden und der gleichen Klasse wie das gesuchte Objekt angehören, mit den Attributen des gesuchten Objektes verglichen und bei Übereinstimmung der Attribute bzw. deren weitgehender Übereinstimmung wird dadurch das gesuchte Objekt ermittelt.

Das erfindungsgemäße System umfasst einen ersten Speicher zur Speicherung einer digitalen Karte, einen zweiten Speicher zur Speicherung einer Tabelle und/oder einer zweiten digitalen Karte und mindestens einen Prozessor zur Durchführung des Verfahrens nach Merkmalen eines der Verfahrensansprüche. Der erste Speicher ist in einem Fahrzeug angeordnet und die in ihm gespeicherte digitale Karte wird auch zu anderen Zwecken, insbesondere zur Navigation und zur Kartendarstellung im Fahrzeug verwendet. Zur Verwendung durch den Nutzer umfasst das System weiter eine Benutzerschnittstelle, die optisch und/oder akustisch ausgeführt sein kann. Durch die optische Benutzerschnittstelle kann beispielsweise die Kartendarstellung zur Navigation dargestellt werden und/oder der Nutzer die Bedienung des Systems durch Zieleingaben, gewünschte Zwischenziele und/oder gewünschte Ziel- oder Zwischenzielkategorien vornehmen.

In einer Ausführungsform der Erfindung kann der zweite Speicher im Fahrzeug angeordnet sein. Es kann sich beispielsweise um ein tragbares, herausnehmbares Speicherelement mit aktuellen Daten handeln, das der Nutzer mit ins Fahrzeug bringt und in Verbindung mit dem ersten Speicher im Fahrzeug und insbesondere in Verbindung mit dem im Fahrzeug vorhandenen Navigationssystem nutzt. Das Speichermedium hat der Nutzer im Vorfeld z. B. zur Vorbereitung einer Reise käuflich erworben, oder sich aus einem anderen Medium, z. B. dem Internet, die aktuellen Daten heruntergeladen. Diese Ausführungsform ist auch ohne Zentrale, ohne Kommunikationseinrichtungen und damit ohne Infrastruktur funktionsfähig, was eine preiswerte Gestaltung des Systems erlaubt.

Besonders vorteilhaft lässt sich das System durch das Zusammenspiel des fahrzeugseitigen Systems mit einer Zentrale ergänzen, da über die Zentrale stets aktuelle Daten abgerufen werden können und auch geänderten Reiseplänen Rechnung getragen werden kann. Die Kommunikation mit der Zentrale erfolgt über Kommunikationseinrichtungen.

In einer Ausführungsform des Systems werden Manöverhinweise des Navigationssystems über die optische und/oder akustische Benutzerschnittstelle im Fahrzeug ausgegeben. Es ist möglich, dass die Routenberechnung im Fahrzeug erfolgt, was den autonomen Betrieb des Fahrzeugsystems erlaubt. Die Routenberechnung in der Zentrale hat den Vorteil, dass in der Zentrale stets die aktuellsten Daten vorliegen, auf deren Basis dann die Routenberechnung erfolgen kann. Wenn z. B. die Zentrale überlastet ist, eine Kommunikation nicht möglich ist etc. ist ein autonomer Betrieb des fahrzeugseitigen Systems am vorteilhaftesten. Falls die digitale Karte im Fahrzeug einen alten Stand hat, dann empfiehlt sich eher, die Routenberechnung auf Basis der aktuellen Daten in der Zentrale durchzuführen. Die Aufteilung, ob die Berechnung der Route in der Zentrale oder im Fahrzeug, oder teilweise im Fahrzeug und teilweise in der Zentrale erfolgt, kann situationsangepasst dynamisch erfolgen und sich ändernden Randbedingungen Rechnung tragen. Die kann z. B. der Fall sein, wenn die Kommunikationsverbindung zur Zentrale abbricht.

Bevorzugte Ausführungsbeispiele der Erfindung werden anhand der zugehörigen Zeichnungen nachfolgend beschrieben. Es zeigen jeweils in schematischer Darstellung,
- **Fig. 1**: ein Ablaufdiagramm des Verfahrens,
- **Fig. 2**: eine digitale Karte mit Knoten und Kanten,
- **Fig. 3**: eine digitale Karte mit Knoten und Kanten und dem aufgefundenen Ort,
- **Fig. 4**: einen Überblick über ein fahrzeugautonomes System,
- **Fig. 5**: einen Überblick über ein System mit Zentrale,
- **Fig. 6**: Aufbau eines als Objekt dargestellten Kartenelementes, am Beispiel einer als Bezugssystem dienenden Kante,
- **Fig. 7**: ein gesuchtes Objekt in transformierter Form,
- **Fig. 8**: Aufbau eines gesuchten Objektes mit Bezugssystem,
- **Fig. 9**: die Kartendarstellung eines Autobahnkreuzes und
- **Fig. 10**: ein Objekt mit einem Zugang über eine Kante.

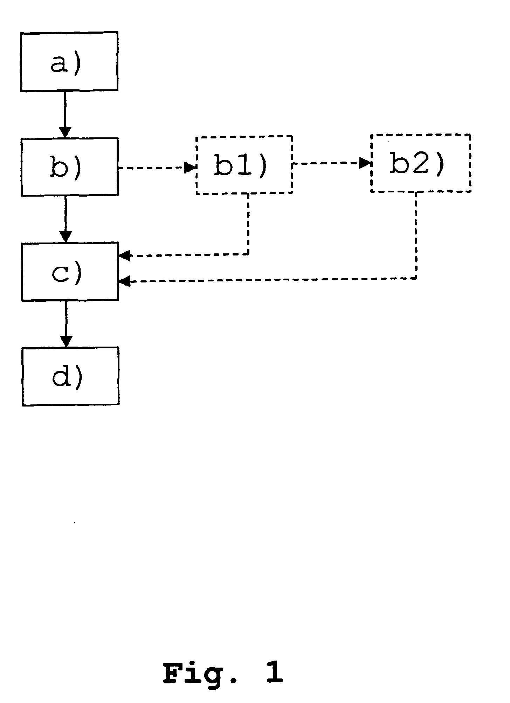

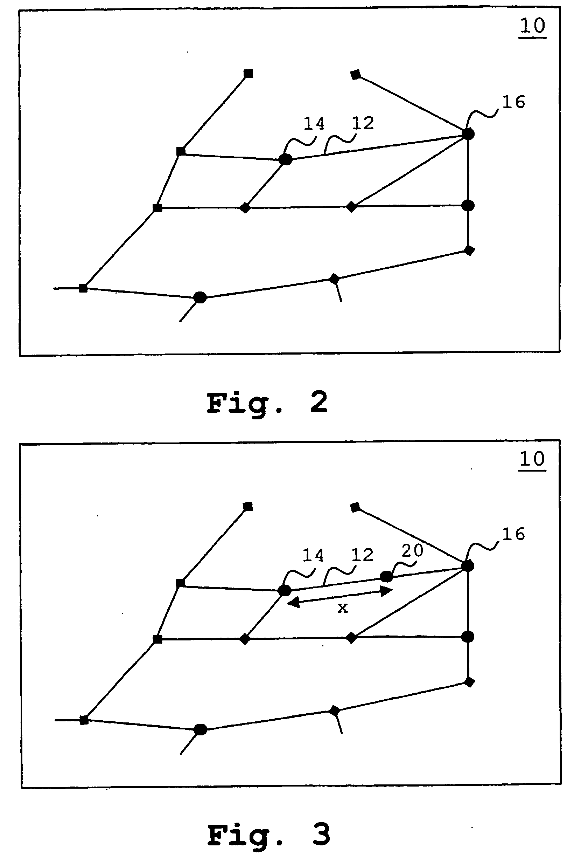

Anhand des Ablaufdiagramms in Fig. 1 und einer schematisch dargestellten digitalen Karte in Fig. 2 soll das Verfahren anhand eines Ausführungsbeispiels erläutert werden. Es soll in der digitalen Karte 10 mit der Kante 12, die zwischen den Knotenpunkten 14 und 16 verläuft, ein Ort 20 aufgefunden werden. Als Anfangspunkt der Kante 12 sei 14 definiert, als Endpunkt 16. Der gesuchte Ort 20 wird nicht direkt in Geokoordinaten - Längen- und Breitengraden - angegeben, in Schritt a) des Verfahrens wird das zweite Koordinatensystem definiert. Im Beispiel wird als zweites Koordinatensystem die Kante 12 definiert. Das zweite Koordinatensystem entspricht also einem eindimensionales Koordinatensystem mit Bezugspunkt 14, das in der gleichen Richtung verläuft wie die Kante 12. Die Koordinatendaten des gesuchten Ortes 20 im zweiten Koordinatensystem werden in Schritt b) als "x Meter" angegeben. Er befindet sich also x Meter vom Anfangspunkt 14 der Kante entfernt.. Im Schritt c) des Verfahrens wird das zweite Koordinatensystem, also die Kante 12 in der digitalen Karte aufgefunden und im Schritt d) werden die Koordinaten abgetragen. In Fig. 3 ist der gesuchte Ort 20 dann eingetragen und zwar x Meter vom Bezugspunkt 14 des eindimensionalen Koordinatensystems, der Kante 12, entfernt. Die in Fig. 1 gestrichelt dargestellten Verfahrensschritte stellen vorteilhafte Aus- und Weiterbildungen des Verfahrens dar, die anhand der folgenden Ausführungsbeispiele erläutert werden.

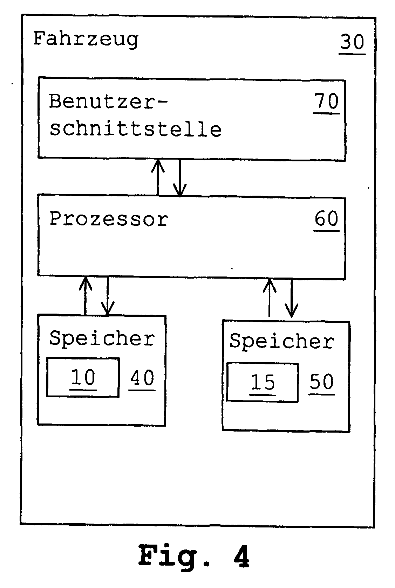

Fig. 4 zeigt einen schematischen Überblick über ein fahrzeugautonomes System mit einem Speicher 40, in dem die digitale Karte 10 gespeichert ist, einem zweiten Speicher 50, in dem die gesuchten Orte in einer Tabelle oder einer weiteren digitalen Karte 15 gespeichert sind, einem Prozessor 60 und einer Benutzerschnittstelle 70. Der Nutzer gibt hier über die Benutzerschnittstelle 70 Kriterien für ein gewünschtes Ziel oder Zwischenziel ein, in der im Speicher 50 gespeicherten digitalen Karte 15 oder Tabelle wird nach einem Ort gesucht, der den Kriterien entspricht. Dieser Ort ist nun der gesuchte Ort in der digitalen Karte 10, die in dem Speicher 40 gespeichert ist. Der Ort wird gemäß dem erfindungsgemäßen Verfahren aufgefunden. Daraufhin wird er über die Benutzerschnittstelle 70, über die die digitale Karte 10 angezeigt wird, in der digitalen Karte 10 markiert, angezeigt und als Ziel oder Zwischenziel für eine Routenberechnung verwendet.

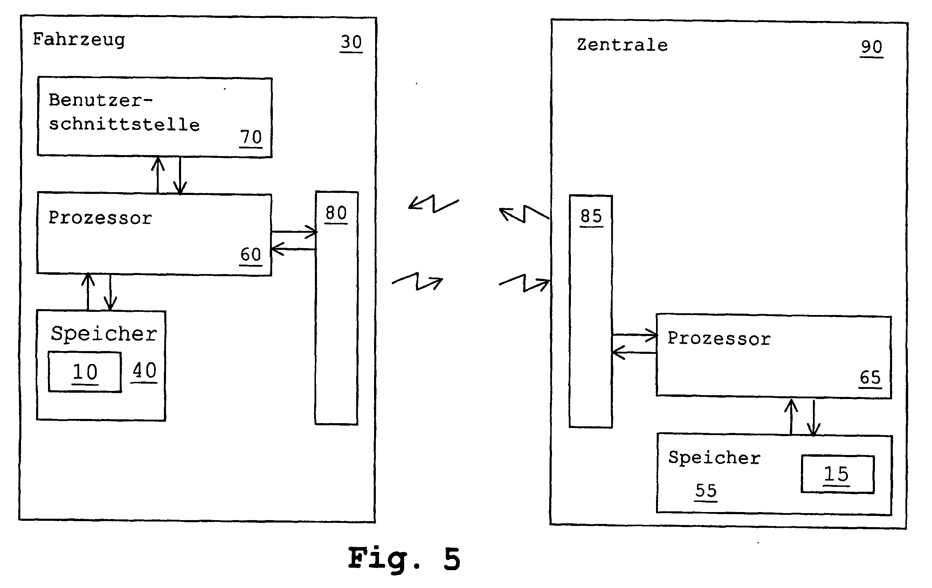

Fig. 5 zeigt einen schematischen Überblick über das System im Fahrzeug 30 mit dem Prozessor 60, dem Speicher 50 mit der digitalen Karte 10, der Benutzerschnittstelle 70 und einer Kommunikationseinrichtung 80. Über die Kommunikationseinrichtungen 80 und 85 kommuniziert das Fahrzeugsystem mit einem System in einer Zentrale 90, das einen Prozessor 65 und einen Speicher 55 umfasst, in dem eine weitere digitale Karte 15 gespeichert ist. Über die Kommunikationseinrichtungen 80 und 85 werden die Kriterien des Nutzers für ein Ziel oder Zwischenziel an die Zentrale 90 übertragen, Orte und/oder Kartenelemente werden in der digitalen Karte 15 entsprechend den Kriterien ausgewählt und an das Fahrzeug 30 übertragen. Dort werden die Orte und/oder Kartenelemente mittels des erfindungsgemäßen Verfahrens Orten und/oder Kartenelementen in der digitalen Karte 10 aufgefunden und weiterverarbeitet.

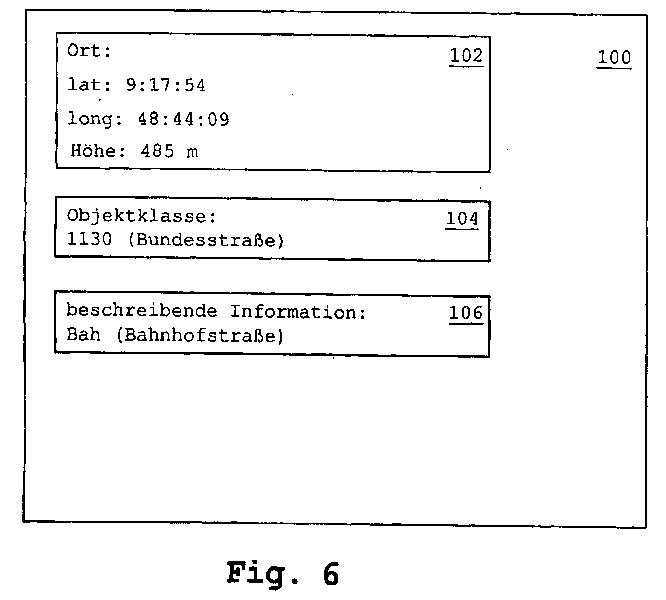

Fig. 6 zeigt den Aufbau eines als Objekt 100 dargestellten Kartenelementes am Beispiel einer Kante. Als Ort 102 des Kartenelementes wird hierbei der Anfangspunkt der Kante genommen. Als Anfangspunkt wird beispielsweise der südlichste oder der westlichste Punkt der Kante genommen. Bei eindimensionalen Elementen entspricht der Ort des Kartenelementes dem Ort des Objektes. Bei dreidimensionalen Objekten wird beispielsweise der südlichste Punkt des Objektes als Ort genommen. Alternativ ist es ebenfalls möglich, bei mehrdimensionalen Kartenelementen als Ort z. B. den Linien- oder Flächenschwerpunkt zu wählen. Die Höhe gibt die Höhe der Kante über dem Meeresspiegel (NN) an. Steht die Höheninformation einer Kante nicht zur Verfügung, kann dieser Wert z. B. mit dem Hex-Wert "FFF" aufgefüllt werden, um deutlich zu machen, dass die Höheninformation nicht zur Verfügung steht. Die Objektklasse 104 bezeichnet im vorliegenden Beispiel eine Bundesstraße und die beschreibende Information 106 identifiziert das vorliegende Objekt in diesem Beispiel als die Bahnhofstraße.

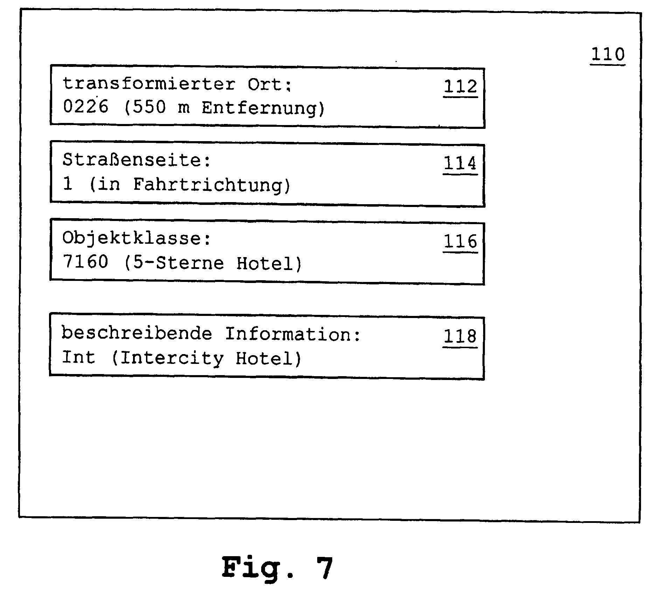

In Fig. 7 ist ein in der digitalen Karte 110 gesuchtes Objekt 105 in transformierter Form dargestellt. Der transformierte Ort 112 gibt die Entfernung zum Bezugspunkt des neuen Koordinatensystems an. Um das Objekt 110 in der digitalen Karte 10 aufzufinden, muss also zusätzlich zum Objekt 110 das Objekt, das das neue Koordinatensystem definiert, mit angegeben werden. Im Beispiel wäre das das Objekt 100 aus Fig. 6. Objekt 110 ist über die Kante, die durch das Objekt 100 definiert ist, zu erreichen.

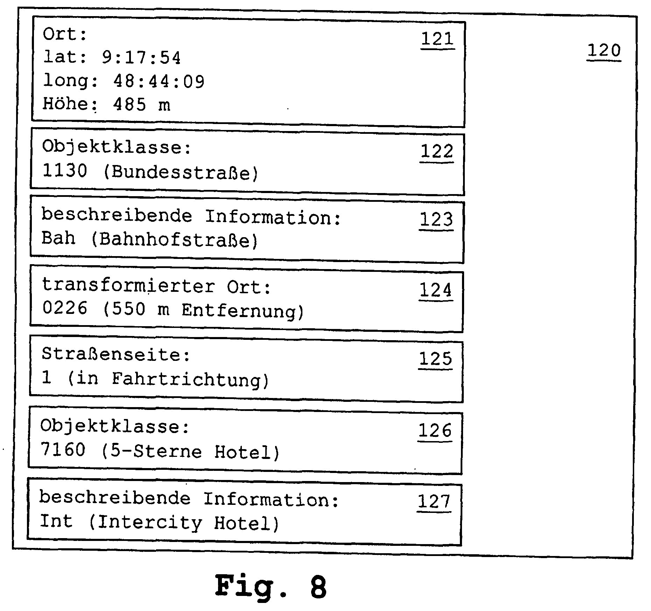

Für das anhand von Fig. 5 beschriebene Beispiel bedeutet das, dass von der Zentrale 90 das Objekt 100 zusammen mit Objekt 110 in Form des Objektes 120 aus Fig. 8 an das Fahrzeug 30 übertragen wird und anhand dieser Information das Objekt 110 in der digitalen Karte 10 mittels des erfindungsgemäßen Verfahrens aufgefunden wird.

Die transformierte Ortsangabe 112 gibt also die Entfernung zu dem Anfangspunkt 102 der Kante an, die durch Objekt 100 definiert ist. Von diesem Punkt 102 aus kann die Position jedes Objektes auf der Kante 110 mit einer eindimensionalen Größe - nämlich der Entfernung 112 - eindeutig beschrieben werden, unabhängig von der Darstellungsart (Polygonzug, Splines ...) der Kanten auf der digitalen Karte 10. Mit der Entfernung 112 wird die Position des gesuchten Objektes 110 eindeutig beschrieben. Als Anfangspunkt 102 einer Kante kann beispielsweise der Punkt der Kante genommen werden, der die niedrigeren Hausnummern aufweist.

Um nun eine allgemeine Eindeutigkeit des gesuchten Objektes zu ermöglichen, werden die Informationen Straßenseite 114, Objektklasse 116 und beschreibende Information 118 hinzugenommen. Die Objektklasse 116 ermöglicht das Ausblenden von Objekten anderer Klassen im Umfeld des gesuchten Objektes, um die Anzahl der Objekte in der Endauswahl zu reduzieren. Die beschreibende Information 118 ermöglicht das Ausblenden von anderen Objekten, die der gleichen Objektklasse 116 angehören. Die Information Straßenseite 114 ermöglicht schließlich die Zuweisung des Objektes zu einer bestimmten Straßenseite (für Gebäude) bzw. zu einer Fahrtrichtung (für Verkehrsereignisse), um von der richtigen Seite einer Straße her zu kommen, wenn z. B. die beiden Fahrtrichtungen durch Leitplanken oder dergleichen voneinander getrennt sind. Dieses kann z. B. durch einen 1-Bit-Wert angegeben werden. "1" würden dann z. B. bedeuten "vom Anfangspunkt an in Fahrtrichtung und "0" würde bedeuten "vom Anfangspunkt entgegen der Fahrtrichtung", d. h. auf der gegenüberliegenden Straßenseite. Somit können auch bewegliche Objekte bezogen auf die dazugehörige Straßenkante eindeutig angegeben werden.

In Fig. 8 ist das gesuchte transformierte Objekt 120 nochmals mit seinem Bezugskoordinatensystem dargestellt. Diesem schematischen Aufbau entsprechend wird das gesuchte Objekt von der Zentrale ans Fahrzeug übermittelt werden. Im einzelnen besteht das Objekt mit seinem Bezugssystem aus der Angabe des Ortes der Bezugskante 121, mit der Objektklasse der Bezugskante 122, der beschreibenden Information der Bezugskante 123, dem auf die Bezugskante bezogenen Ort des Objektes 124, der Angabe der Straßenseite 125, der Objektklasse 126 und beschreibenden Information 127 des Objektes.

Zum Auffinden des Objektes 120 in der digitalen Karte wird ein Suchgebiet erzeugt, dessen Mittelpunkt durch die Längen- und Breitenangabe des Ortes 121 vorgegeben ist. Die halbe Diagonale des quadratischen Suchgebietes ist dabei größer als der transformierte Ort 124. Innerhalb dieses Quadrates werden dann zum Auffinden der Bezugskante nur die Objekte betrachtet, die derselben Objektklasse 122 angehören wie die Bezugskante. Die beschreibende Information 123 dient dazu, die entsprechende Kante aus der Menge der Kanten, die derselben Objektklasse angehören, zu bestimmen. Die Höhe dient dazu, bei mehreren Straßenabschnitten mit derselben beschreibenden Information 123 zwischen sich überkreuzenden Spuren zu unterscheiden. Da zusätzlich der transformierte Ort 121 und die Straßenseite 125 des gesuchten Objektes bekannt sind, kann eine Route zu diesem Objekt 120 berechnet bzw. dieses Objekt bei der Routenberechnung mitberücksichtigt werden, z. B. bei Verkehrsereignissen.

Es kann passieren, dass das gesuchte Objekt 120 auf der digitalen Karte 10 nicht vorhanden ist, da die zentralenseitige digitale Karte 15 in der Regel wesentlich häufiger aktualisiert wird als die fahrzeugseitige digitale Karte 10. Falls das gesuchte Objekt 120 in der digitalen Karte 10 fehlt, wird unter Zuhilfenahme von entsprechenden Informationen, z. B. Versionsnummer, der digitalen Karte 10 zentralenseitig die Differenz der digitalen Karte 10 zu der digitalen Karte 15 ermittelt und ins Fahrzeug versendet. Hierfür wird im Fahrzeug die empfangene Differenz mit der digitalen Karte 10 zusammengeführt, so dass die empfangenen Kartendaten gemeinsam mit der ursprünglichen digitalen Karte 10 eine navigierbare Kartenbasis ergeben. Günstigerweise wird die Information über die digitale Karte 10 während der Anfrage des Nutzers über ein gesuchtes Objekt als Ziel oder Zwischenziel zusammen mit der Anfrage oder in einem getrennten Block an die Zentrale gesendet. Mit Hilfe der Information über die digitale Karte 10 kann in der Zentrale 90 festgestellt werden, ob die Kante 100, die als Bezugssystem verwendet wird, in der Kartenbasis 10 enthalten ist - dies geschieht in Schritt b1) der schematischen Darstellung in Fig. 1 des Verfahrens. Ist dies gegeben, d. h. das Objekt 100 auch in der digitalen Karte 10 enthalten, werden nur die Objektinformationen des Objekts 120 ins Fahrzeug übertragen. Andernfalls, d. h. wenn die Kante 100 nicht in der Karte 10 enthalten ist, erstellt die Zentrale 90 einen entsprechenden Kartenausschnitt mit der benötigten/notwendigen Detaillierung und sendet diese Informationen ins Fahrzeug 30 - dies geschieht in Schritt c2) der schematischen Darstellung in Fig. 1 des Verfahrens. Danach sendet die Zentrale 90 dann die Objektinformationen 120. Im Fahrzeug 30 werden die empfangenen Kartendaten mit der vorhandenen Kartenbasis 10 zusammengeführt, so dass eine navigierbare Kartenbasis im Fahrzeug 30 entsteht. Der Kartenausschnitt kann dabei z. B. aus
Manöverpunkten/Manöverhinweisen bestehen, deren Startpunkt auf der im Fahrzeug 30 vorhandenen Kartendatenbank 10 enthalten sein muss, um die empfangenen und die vorhandenen Kartendaten zusammenzuführen. Es können aber auch "echte" Karteninformationen in Form von detaillierten Karteninformationen übertragen werden.

Beispiele für Objektklassen sind in der folgenden Tabelle angegeben:

| Objektklasse | Beschreibungsebene 1 | Beschreibungsebene 2 | Beschreibungsebene 3 | Beschreibungsebene 4 |
|---|---|---|---|---|
| 1000 | Straßen & Fähren | | | |
| *1100* | | *Straßenelement* | | |
| 1110 | | | Europastraße (E) | |
| 1120 | | | Autobahn (A) | |
| 1130 | | | Bundesstraße (B) | |
| 1140 | | | Straße | |
| 1141 | | | | Landstraße (L) |
| 1142 | | | | Kreisstraße (K) |
| 1143 | | | | Verbindung |
| 1144 | | | | Wohnstraße |
| 1145 | | | | Privat |
| 1146 | | | | Fußgängerweg |
| 1147 | | | | Zufahrt |
| *1200* | | *Fähren* | | |
| ... | | | | |
| 3000 | Verkehrsereignisse | | | |
| *3100* | | *Unfälle* | | |
| 3110 | | | Auffahrunfälle | |
| 3111 | | | | ... |
| 3120 | | | Unfälle am Straßenrand | |
| *3200* | | *Verkehrsstaus* | | |
| *3300* | | *Baustellen* | | |
| ... | | | | |
| 4000 | Verkehrsereignisse | | | |
| 5000 | Polizei / | | | |
| | Feuerwehr / Ärzte / Krankenhäuser | | | |
| 6000 | Sehenswürdigkeiten | | | |
| 7000 | Hotels / Restaurants / Bars | | | |
| 8000 | Banken / Geschäfte | | | |
| *7100* | | *Hotels & Pensionen* | | |
| 7110 | | | Pensionen | |
| 7111 | | | | ... |
| 7120 | | | 1* Hotels | |
| 7130 | | | 2* Hotels | |
| 7160 | | | 5* Hotels | |
| 7170 | | | Appartements | |
| *7200* | | *Restaurants* | | |
| *7300* | | *Bars* | | |
| ... | | | | |
| 8000 | Sonstige Veranstaltungen | | | |
| ... | | | | |

Zum Ermitteln der Entfernung des Objektes 110 vom Bezugspunkt des Objektes 100 kann die Differenz der beiden Geo-Koordinaten der Orte von Objekt 110 und Objekt 100 unter Zuhilfenahme der digitalen Karte 15 gebildet werden.

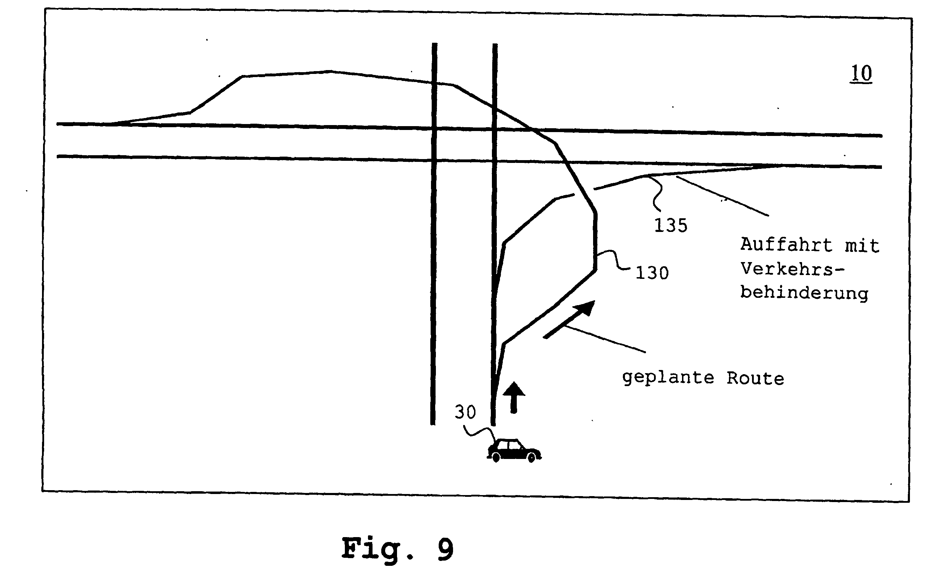

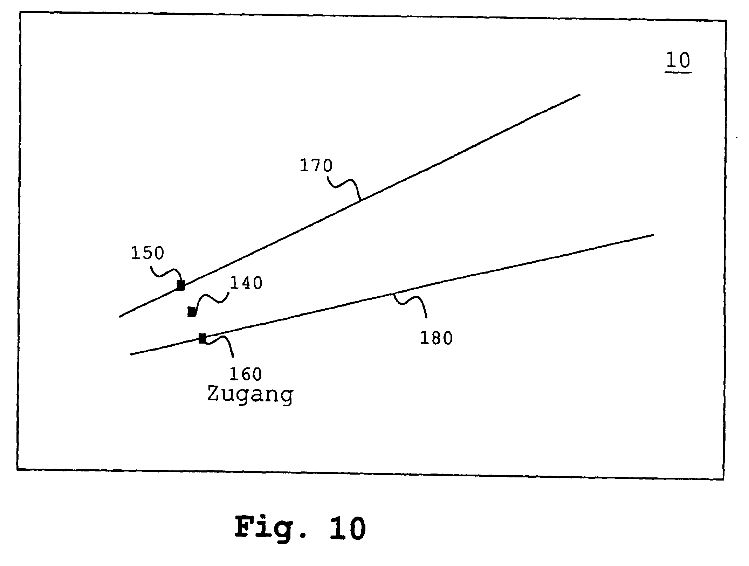

Anhand von Fig. 9 und Fig. 10 werden weitere Vorteile der Erfindung beschrieben. Die Erfindung ermöglicht auch das Auffinden von Objekten, die dreidimensional sind - z. B. sich überschneidende Zu-/ Abfahrten von Autobahnkreuzen, die zu derselben Kante bzw. dem selben Autobahnabschnitt gehören.

Weiter ist es möglich, Hausnummern, bzw. die genaue Position eines Objektes auf einer Kante, die richtige Straßenseite bzw. Fahrtrichtung des Objektes aufzufinden. Ebenfalls aufgefunden werden können Objekte, die zwar auf der Karte 15, aber nicht auf der Karte 10 existieren, wie z. B. dynamische Objekte, Unterschiede aufgrund verschiedener Kartenbasen, Unterschiede aufgrund verschiedener Herstellungsdaten etc.

Fig. 9 zeigt die Kartendarstellung eines Autobahnkreuzes als ein solches Beispiel. In diesem Beispiel haben die beiden Auffahrten 130 und 135 dieselbe beschreibende Information. Wenn sich der Verkehr nun auf einer der beiden Rampen staut, kann im Fahrzeug 30 nicht festgestellt werden, auf welcher der beiden Rampen die Behinderung vorliegt. Ein weiteres Beispiel ist, wenn bei zwei sich überkreuzenden Straßenzügen mit ähnlichem Namen, z. B. Ulmer Straße, Ulmer Allee, ein Objekt am Kreuzungspunkt aufgefunden werden soll. Hier ist ohne eine Höheninformation keine Unterscheidung zwischen den beiden Objekten möglich. Das Verfahren ermöglicht das Auffinden dieser Objekte in der Karte 10 und ermöglicht damit, die Objekte als Ziele oder Zwischenziele für eine Onboard-Navigation weiterzuverarbeiten. Das optimiert das Zusammenspiel zwischen Onboard-Navigationssystem und Zentrale 90.
Unter dynamischen Objekten werden Objekte verstanden, die örtlich gebunden sind, wie z. B. Stadtfestivals, die örtlich gebundene Verkehrsstörungen darstellen, z. B. Unfall, Baustelle, und die langsam bewegliche Objekte darstellen, wie z. B. Verkehrsstaus. Die Positionsangabe für Verkehrsstörungen jeglicher Art ist heute sehr unscharf, die Unschärfe wird aber mit heutigen Zuordnungsverfahren, z. B. TMC, noch erhöht. Das erfindungsgemäße Verfahren berücksichtigt, dass die Positionsangabe für Verkehrsstörungen in Zukunft genauer werden wird, und dass dann mit dem vorliegenden Verfahren auch die genaue Position von der Zentrale 90 ans Fahrzeug 30 übermittelt werden kann. Vorteilhaft ist weiter, dass ein und derselbe Objektklassenkatalog alle Objekte einer digitalen Karte 10 oder 15 enthält. Es wird kein Unterschied gemacht, ob es sich bei einem Objekt um ein gesuchtes Objekt oder um ein navigationsrelevantes Objekt handelt. Dies erspart den doppelten Aufwand, um zwei getrennte Objektklassenkataloge zu erstellen. Außerdem wird ein optimiertes Verhalten der Prozessoren 60 und 65 erreicht. Ein weiterer Vorteil des Systems besteht darin, dass mit dem gesuchten Objekt 110 gleich die Kante 100, über die das gesuchte Objekt angefahren werden kann, mit übertragen wird, so dass das Zusammenspiel mit der Navigation weiter verbessert wird. Die Verwendung im Navigationssystem ist ohne aufwendige Aufbereitung möglich, so dass sich die Möglichkeit einer optimalen Zielführung zum Objekt ergibt.

In Fig. 10 wird das Beispiel illustriert, dass ein gesuchtes Objekt sich auf einer Kante befindet, die in der digitalen Karte 10 nicht vorliegt. Wird zu einem aufgefundenen Objekt, das ohne zugehörige Kante übertragen wurde, eine Route berechnet, nimmt das Navigationssystem die Kante auf der sich das Objekt in der digitalen Karte 10 befindet. Das Objekt muss sich aber in der digitalen Karte 10 nicht zwangsläufig auf der richtigen Kante befinden. Es kann auch vorkommen, dass das Objekt 140 sich zwischen zwei Kanten 170 und 180 befindet. Der Zugang 160 zum Objekt 140 sei im Beispiel von Fig. 10 über die Kante 180 möglich. Da dem Navigationssystem die Kante, über die der Zugang zum Objekt 140 möglich ist, nicht mitübertragen wurde, kann es vorkommen, dass das Navigationssystem dem Objekt 140 den Zugang 150 über die Kante 170 zuweist. In der Realität ist dieser Zugang nicht möglich. Aus den vorliegenden Daten der digitalen Karte war es aber für das Navigationssystem nicht möglich, den richtigen Zugang zu bestimmen. Das erfindungsgemäße Verfahren schafft hier Abhilfe, indem zusammen mit dem gesuchten Objekt 140 die Kante, über die das Objekt erreicht werden kann, mitübertragen wird. Im vorliegenden Beispiel würde dann mit dem Objekt 140 die Kante 180 mitübertragen und somit die Route über die Kante 180 berechnet.

## Patentansprüche

1. Verfahren zum Auffinden eines Ortes (20, 112, 124) in einer digitalen Karte (10), deren Orte bezogen auf ein erstes Koordinatensystem angegeben sind, mit den folgenden Schritten:
a) Bestimmung eines zweiten Koordinatensystems, das bezogen auf ein Objekt (14) der digitalen Karte (10) angegeben ist,
b) Bestimmung der Koordinatendaten des gesuchten Ortes (20, 112, 124) bezogen auf das zweite Koordinatensystem,
c) Auffinden des zweiten Koordinatensystems in der digitalen Karte (10),
d) Auffinden des gesuchten Ortes (20, 112, 124) in der digitalen Karte (10) durch Auftragen der Koordinatendaten des gesuchten Ortes (20, 112, 124) im zweiten Koordinatensystem.

2. Verfahren nach Anspruch 1,
**dadurch gekennzeichnet, dass**
die bestimmenden Daten des zweiten Koordinatensystems einen Bezugspunkt (14, 102) und weitere Informationen (104, 106) umfassen.

3. Verfahren nach Anspruch 1 oder 2,
**dadurch gekennzeichnet, dass**
Kartenelemente (12, 100, 110, 120, 130, 135, 140, 150, 160, 170, 180) Orte (102, 20, 112, 124) und zusätzliche Informationen (104, 106, 114, 116, 118, 122, 123, 125, 126, 127) umfassen.

4. Verfahren nach Anspruch 3,
**dadurch gekennzeichnet, dass**
das zweite Koordinatensystem durch ein Kartenelement (100) in der digitalen Karte (10) definiert ist, wobei der Bezugspunkt (102) des zweiten Koordinatensystems dem Ort (102) des Kartenelements (100) entspricht.

5. Verfahren nach einem der vorhergehenden Ansprüche,
**dadurch gekennzeichnet, dass**
die gesuchten Orte (20, 112, 124) in einer Tabelle und/oder einer weiteren digitalen Karte (15) gespeichert sind.

6. Verfahren nach Anspruch 5,
**dadurch gekennzeichnet, dass**
nach Schritt b) und vor Schritt c) im Schritt b1) überprüft wird, ob das das zweite Koordinatensystem definierende Kartenelement (100) in der digitalen Karte (10) vorhanden ist,
und falls es fehlt, im Schritt b2) das das zweite Koordinatensystem definierende Kartenelement (100) von der weiteren digitalen Karte (15) und/oder der Tabelle in die digitale Karte (10) übertragen und dort gespeichert wird.

7. Verfahren nach einem der vorhergehenden Ansprüche,
**dadurch gekennzeichnet, dass**
der Schritt c) zum Auffinden des das zweite Koordinatensystem definierenden Kartenelementes (100) sich in die folgenden Teilschritte untergliedert:
der Ort (102) des Kartenelementes wird aufgefunden, dann wird geprüft, ob sich Kartenelemente am Ort oder in der Nähe des Ortes des Kartenelementes (102) befinden, und dann werden ausgewählte zusätzliche Informationen des Kartenelementes (100) mit zusätzlichen Informationen von Kartenelementen verglichen, die sich in der digitalen Karte am Ort oder in der Nähe des Ortes des Kartenelementes (102) befinden.

8. Verfahren nach einem der vorhergehenden Ansprüche,
**dadurch gekennzeichnet, dass**
auch ein Kartenelement (110, 120, 140) aufgefunden werden kann, indem der Ort des Kartenelementes (112, 124) gemäß zumindest den Schritten a), b), c) und d) aufgefunden wird, dann geprüft wird, ob sich Kartenelemente am Ort oder in der Nähe des Ortes des Kartenelementes (110, 120, 140) befinden,
und dann ausgewählte zusätzliche Informationen des Kartenelementes (110, 120, 140) mit zusätzlichen Informationen von Kartenelementen verglichen werden, die sich in der digitalen Karte am Ort oder in der Nähe des Ortes des Kartenelementes (112, 124) befinden.

9. Verfahren nach Anspruch 8,
**dadurch gekennzeichnet, dass**
falls festgestellt wird, dass das gesuchte Kartenelement (110, 120, 140) in der digitalen Karte (10) fehlt,
es in einem weiteren Schritt von der Tabelle und/oder von der weiteren digitalen Karte (15) in die digitale Karte (10) übertragen und dort gespeichert wird.

10. Verfahren nach einem der vorhergehenden Ansprüche,
**dadurch gekennzeichnet, dass**
der gesuchte Ort (20, 112, 124) bzw. das gesuchte Kartenelement (110, 120, 140) als Ziel oder Zwischenziel für eine Routenberechnung dient.

11. Verfahren nach einem der vorhergehenden Ansprüche,
**dadurch gekennzeichnet, dass**
das zweite Koordinatensystem eindimensional ist.

12. Verfahren nach Anspruch 11,
**dadurch gekennzeichnet, dass**
das das zweite Koordinatensystem definierende Kartenelement (100) eine Kante ist.

13. Verfahren nach Anspruch 12,
**dadurch gekennzeichnet, dass**
die Kante auf einer berechneten Route für ein Fahrzeug (30) liegt.

14. Verfahren nach Anspruch 12 oder 13,
**dadurch gekennzeichnet, dass**
der gesuchte Ort (20, 112, 124) bzw. das gesuchte Kartenelement (110, 120, 140) über die Kante erreicht werden kann.

15. Verfahren nach einem der vorhergehenden Ansprüche,
**dadurch gekennzeichnet, dass**
zum Auffinden des gesuchten Kartenelementes (110, 120, 140) auf der digitalen Karte (10) ein Suchgebiet generiert wird.

16. Verfahren nach einem der Ansprüche 3 bis 15,
**dadurch gekennzeichnet, dass**
die Kartenelemente als Objekte (100, 110, 120) angegeben sind, wobei die weiteren Informationen (104, 106, 114, 116, 118, 122, 123, 125, 126, 127) der Kartenelemente den Attributen der Objekte (104, 106, 114, 116, 118, 122, 123, 125, 126, 127) entsprechen.

17. Verfahren nach Anspruch 16,
**dadurch gekennzeichnet, dass**
Attribute der Objekte (104, 106, 114, 116, 118, 122, 123, 125, 126, 127) dazu verwendet werden, das gesuchte Objekt (110, 120) unter den Objekten der gleichen Klasse (104, 116, 122, 126) im Suchgebiet zu ermitteln.

18. System mit einem ersten Speicher (40) zur Speicherung einer digitalen Karte (10), einem zweiten Speicher (50, 55) zur Speicherung einer weiteren digitalen Karte (15) und/oder einer Tabelle mit gesuchten Orten, mindestens einem Prozessor (60) zum Durchführen des Verfahrens nach einem der vorhergehenden Ansprüche, und einer optischen und/oder akustischen Benutzerschnittstelle (70) zur Eingabe von Kriterien gesuchter Orte, wobei zumindest der erste Speicher (40), der mindestens eine Prozessor (60) und die optische und/oder akustische Benutzerschnittstelle (70) in einem Fahrzeug (30) angeordnet sind, und wobei gesuchte Orte gemäß dem Verfahren nach einem der vorhergehenden Ansprüche aufgefunden werden.

19. System nach Anspruch 18,
**dadurch gekennzeichnet, dass**
im Fahrzeug Kommunikationseinrichtungen (80) vorhanden sind.

20. System nach Anspruch 18 oder 19,
**dadurch gekennzeichnet, dass**
der zweite Speicher im Fahrzeug (50) und/oder in einer Zentrale (55) angeordnet ist.

21. System nach Anspruch 20,
**dadurch gekennzeichnet, dass**
im Fahrzeug (30) und/oder in der Zentrale (90) eine Routenberechnung erfolgt und Manöverhinweise über die optische und/oder akustische Benutzerschnittstelle (70) ausgegeben werden.

## Claims

1. Method of finding a location (20, 112, 124) in a digital map (10), the locations of which are specified by reference to a first co-ordinate system, comprising the following steps:
a) defining a second co-ordinate system which is specified by reference to an object (14) of the digital map (10),
b) defining the co-ordinate data of the sought location (20, 112, 124) by reference to the second co-ordinate system,
c) finding the second co-ordinate system in the digital map (10),
d) finding the sought location (20, 112, 124) in the digital map (10) by plotting the co-ordinate data of the sought location (20, 112, 124) in the second co-ordinate system.

2. Method as claimed in claim 1,
**characterised in that**
the defining data of the second co-ordinate system contains a reference point (14, 102) and other information (104, 106).

3. Method as claimed in claim 1 or 2,
**characterised in that**
map elements (12, 100, 110, 120, 130, 135, 140, 150, 160, 170, 180) contain locations (102, 20, 112, 124) and additional information (104, 106, 114, 116, 118, 122, 123, 125, 126, 127).

4. Method as claimed in claim 3,
**characterised in that**
the second co-ordinate system is defined by a map element (100) in the digital map (10) and the reference point (102) of the second co-ordinate system corresponds to the location (102) of the map element (100).

5. Method as claimed in one of the preceding claims,
**characterised in that**
the sought locations (20, 112, 124) are stored in a table and/or in another digital map (15).

6. Method as claimed in claim 5,
**characterised in that**
after step b) and before step c), a check is run at step b1) to ascertain whether the map element (100) defining the second co-ordinate system exists in the digital map (10) and, if it is missing, the map element (100) defining the second co-ordinate system is transmitted from the other digital map (15) into the digital map (10) and/or into the table and stored there.

7. Method as claimed in one of the preceding claims,
**characterised in that**
step c) at which the map element (100) defining the second co-ordinate system is found is sub-divided into the following part-steps:
the location (102) of the map element is found and then a check is run to ascertain whether map elements are located at the location of or in the vicinity of the location of the map element (102), after which selected additional information of the map element (100) is compared with additional information of map elements located in the digital map at the location of or in the vicinity of the location of the map element (102).

8. Method as claimed in one of the preceding claims,
**characterised in that**
a map element (110, 120, 140) can be found by finding the location of the map element (112, 124) as specified in at least step a), b), c) and d), and then a check is run to ascertain whether map elements are located at the location of or in the vicinity of the location of the map element (110, 120, 140),
after which selected additional information of the map element (110, 120, 140) is compared with additional information of map elements located in the digital map at the location of or in the vicinity of the location of the map element (112, 124) .

9. Method as claimed in claim 8,
**characterised in that**
if it is established that the sought map element (110, 120, 140) is missing from the digital map (10), it is transmitted, during another step, from the table and/or from the other digital map (15) to the digital map (10) and stored there.

10. Method as claimed in one of the preceding claims,
**characterised in that**
the sought location (20, 112, 124) or the sought map element (110, 120, 140) is used as a destination or intermediate destination for a route computation.

11. Method as claimed in one of the preceding claims,
**characterised in that**
the second co-ordinate system is one-dimensional.

12. Method as claimed in claim 11,
**characterised in that**
the map element (100) defining the second co-ordinate system is an edge.

13. Method as claimed in claim 12,
**characterised in that**
the edge lies on a route computed for a vehicle (30).

14. Method as claimed in claim 12 or 13,
**characterised in that**
the sought location (20, 112, 124) or the sought map element (110, 120, 140) can be reached via the edge.

15. Method as claimed in one of the preceding claims,
**characterised in that**
a search area is created on the digital map (10) in order to find the sought map element (110, 120, 140).

16. Method as claimed in one of claims 3 to 15,
**characterised in that**
the map elements are specified as objects (100, 110, 120) and the additional information (104, 106, 114, 116, 118, 122, 123, 125, 126, 127) of the map elements correspond to the attributes of the objects (104, 106, 114, 116, 118, 122, 123, 125, 126, 127).

17. Method as claimed in claim 16,
**characterised in that**
attributes of the objects (104, 106, 114, 116, 118, 122, 123, 125, 126, 127) are used as a means of singling out the sought object (110, 120) from the objects of the same class (104, 116, 122, 126) in the search area.

18. System with a first memory (40) for storing a digital map (10), a second memory (50, 55) for storing another digital map (15) and/or a table containing sought locations, at least one processor (60) for running the method as claimed in one of the preceding claims and an visual and/or acoustic user interface (70) for inputting criteria of sought locations, in which at least the first memory (40) co-operates with the at least one processor (60) and the visual and/or acoustic user interface (70) in a vehicle (30) and the sought locations are found by means of the method as claimed in one of the preceding claims.

19. System as claimed in claim 18,
**characterised in that**
communication units (80) are provided in the vehicle.

20. System as claimed in claim 18 or 19,
**characterised in that**
the second memory (50) is disposed in the vehicle and/or the second memory (550 is disposed in a control centre.

21. System as claimed in claim 20,
**characterised in that**
a route is computed in the vehicle (30) and/or at the control centre (90) and manoeuvring instructions are emitted via the visual and/or acoustic user interface (70).

## Revendications

1. Procédé pour trouver un lieu (20, 112, 124) dans une carte numérique (10) dont les lieux sont indiqués par rapport à un premier système de coordonnées, avec les étapes suivantes :
a) détermination d'un deuxième système de coordonnées qui est indiqué par rapport à un objet (14) de la carte numérique (10),
b) détermination des données de coordonnées du lieu recherché (20, 112, 124) par rapport au deuxième système de coordonnées,
c) localisation du deuxième système de coordonnées dans la carte numérique (10),
d) localisation du lieu recherché (20, 112, 124) dans la carte numérique (10) en reportant les données de coordonnées du lieu recherché (20, 112, 124) dans le deuxième système de coordonnées.

2. Procédé selon la revendication 1, **caractérisé en ce que** les données déterminantes du deuxième système de coordonnées comprennent un point de référence (14, 102) et d'autres informations (104, 106).

3. Procédé selon la revendication 1 ou 2, **caractérisé en ce que** les éléments de carte (12, 100, 110, 120, 130, 135, 140, 150, 160, 170, 180) comprennent des lieux (102, 20, 112, 124) et des informations supplémentaires (104, 106, 114, 116, 118, 122, 123, 125, 126, 127).

4. Procédé selon la revendication 3, **caractérisé en ce que** le deuxième système de coordonnées est défini par un élément de carte (100) dans la carte numérique (10), le point de référence (102) du deuxième système de coordonnées correspondant au lieu (102) de l'élément de carte (100).

5. Procédé selon l'une quelconque des revendications précédentes, **caractérisé en ce que** les lieux recherchés (20, 112, 124) sont mémorisés dans une table et/ou une autre carte numérique (15).

6. Procédé selon la revendication 5, **caractérisé en ce que** après l'étape b) et avant l'étape c), on vérifie pendant l'étape b1) si l'élément de carte (100) définissant le deuxième système de coordonnées est présent dans la carte numérique (10), et s'il est absent, pendant l'étape b2), l'élément de carte (100) définissant le deuxième système de coordonnées est transféré de l'autre carte numérique (15) et/ou de la table dans la carte numérique (10) où il est mémorisé.

7. Procédé selon l'une quelconque des revendications précédentes, **caractérisé en ce que** l'étape (c) pour trouver l'élément de carte (100) définissant le deuxième système de coordonnées est divisée en étapes partielles suivantes : le lieu (102) de l'élément de carte est trouvé, on vérifie alors si des éléments de carte se trouvent sur le lieu ou à proximité du lieu de l'élément de carte (102), puis des informations supplémentaires sélectionnées de l'élément de carte (100) sont comparées avec des informations supplémentaires d'éléments de carte qui se trouvent dans la carte numérique sur le lieu ou à proximité du lieu de l'élément de carte (102).

8. Procédé selon l'une quelconque des revendications précédentes, **caractérisé en ce que** l'on peut également trouver un élément de carte (110, 120, 140) en trouvant le lieu de l'élément de carte (112, 124) suivant au moins les étapes a), b), c) et d), on vérifie alors si des éléments de carte se trouve sur le lieu ou à proximité du lieu de l'élément de carte (110, 120, 140), puis des informations supplémentaires sélectionnées de l'élément de carte (110, 120, 140) sont comparées avec des informations supplémentaires d'éléments de carte qui se trouvent dans la carte numérique sur le lieu ou à proximité du lieu de l'élément de carte (112, 124).

9. Procédé selon la revendication 8, **caractérisé en ce que**, au cas où l'on constate que l'élément de carte (110, 120, 140) recherché est absent dans la carte numérique (10), pendant une autre étape, il est transféré de la table et/ou de l'autre carte numérique (15) dans la carte numérique (10) où il est mémorisé.

10. Procédé selon l'une quelconque des revendications précédentes, **caractérisé en ce que** le lieu recherché (20, 112, 124) ou l'élément de carte recherché (110, 120, 140) sert d'objectif ou d'objectif intermédiaire pour un calcul d'itinéraire.

11. Procédé selon l'une quelconque des revendications précédentes, **caractérisé en ce que** le deuxième système de coordonnées est unidimensionnel.

12. Procédé selon la revendication 11, **caractérisé en ce que** l'élément de carte (100) définissant le deuxième système de coordonnées est une arête.

13. Procédé selon la revendication 12, **caractérisé en ce que** l'arête se trouve sur un itinéraire calculé pour un véhicule (30).

14. Procédé selon la revendication 12 ou 13, **caractérisé en ce que** le lieu recherché (20, 112, 124) ou l'élément de carte recherché (110, 120, 140) peut être atteint par l'intermédiaire de l'arête.

15. Procédé selon l'une quelconque des revendications précédentes, **caractérisé en ce qu'**une zone de recherche est générée sur la carte numérique (10) pour trouver l'élément de carte recherché (110, 120, 140).

16. Procédé selon l'une quelconque des revendications 3 à 15, **caractérisé en ce que** les éléments de carte sont indiqués sous forme d'objets (110, 110, 120), les informations supplémentaires (104, 106, 114, 116, 118, 122, 123, 125, 126, 127) des éléments de carte correspondant aux attributs des objets (104, 106, 114, 116, 118, 122, 123, 125, 126, 127).

17. Procédé selon la revendication 16, **caractérisé en ce que** les attributs des objets (104, 106, 114, 116, 118, 122, 123, 125, 126, 127) sont utilisés pour déterminer l'objet recherché (110, 120) parmi les objets de la même classe (104, 116, 122, 126) dans la zone de recherche.

18. Système avec une première mémoire (40) pour la mémorisation d'une carte numérique (10), une deuxième mémoire (50, 55) pour la mémorisation d'une autre carte numérique (15) et/ou d'une table avec des lieux recherchés, au moins un microprocesseur (60) pour la réalisation du procédé selon l'une quelconque des revendications précédentes, et une interface utilisateur optique et/ou acoustique (70) pour l'entrée de critères des lieux recherchés, la première mémoire (40), le au moins un microprocesseur (60) et l'interface utilisateur optique et/ou acoustique (70) étant placés dans un véhicule (30) et les lieux recherchés étant trouvés selon le procédé selon l'une quelconque des revendications précédentes.

19. Système selon la revendication 18, **caractérisé en ce que** des installations de communication (80) sont prévues dans le véhicule.

20. Système selon la revendication 18 ou 19, **caractérisé en ce que** la deuxième mémoire est disposée dans le véhicule (50) et/ou dans une unité centrale (55).

21. Système selon la revendication 20, **caractérisé en ce qu'**un calcul d'itinéraire est réalisé dans le véhicule (50) et/ou dans l'unité centrale (55) et **en ce que** des indications de conduite sont émises par l'intermédiaire de l'interface utilisateur optique et/ou acoustique (70).
